# EUROPÄISCHE PATENTSCHRIFT

(11) **EP 3 997 350 B1**
(45) Veröffentlichungstag und Bekanntmachung des Hinweises auf die Patenterteilung: **05.04.2023**
(21) Anmeldenummer: 20739883.5
(22) Anmeldetag: 25.06.2020
(51) Int. Cl.: F16C 17/02, F16C 17/03, F16C 33/10, F16C 33/26, F16C 37/00, F16C 17/04, F16C 17/06

(54) **HYDRODYNAMISCHES GLEITLAGER**
HYDRODYNAMIC SLIDING BEARING
PALIER LISSE HYDRODYNAMIQUE

(30) Priorität: 08.07.2019 DE 102019118440
(43) Veröffentlichungstag der Anmeldung: 18.05.2022
(73) Patentinhaber: Miba Industrial Bearings Germany Osterode GmbH, 37520 Osterode am Harz (DE)
(72) Erfinder: SCHÜLER, Eckhard, 37139 Adelebsen (DE); BERNER, Olaf, 37154 Northeim (DE)
(74) Vertreter: Schneider, Peter Christian
(86) Internationale Anmeldenummer: PCT/EP2020/067865
(87) Internationale Veröffentlichungsnummer: WO 2021/004803

(56) Entgegenhaltungen:
- EP-A1- 3 477 131
- EP-A2- 0 246 424
- DE-A1-102008 000 853
- DE-B3-102013 211 710
- JP-A- H09 144 750

## Beschreibung

### Gebiet der Erfindung

Die Erfindung bezieht sich auf ein hydrodynamisches Gleitlager zur Lagerung einer bei bestimmungsgemäßem Betrieb gelagert rotierenden Welle, umfassend eine Mehrzahl von einander in Rotationsrichtung benachbart angeordneten Lagersegmenten, deren Segmentflächen gemeinsam eine Lauffläche für die Welle bilden, wobei wenigstens ein Lagersegment in seiner Segmentfläche eine Mehrzahl von vorwiegend, insbesondere exakt, quer zur Rotationsrichtung ausgerichteten Nuten trägt.

### Stand der Technik

Ein derartiges Gleitlager ist bekannt aus der WO 2012/028345 A1.

Der Grundaufbau hydrodynamischer Gleitlager ist dem Fachmann bekannt. Bei Betrieb rotiert die zu lagernde Welle mit einem geringen Lagerspalt zu der Lauffläche des Lagers, die typischerweise aus einer Mehrzahl von in Rotationsrichtung der Welle gestaffelt angeordneten Lagersegmenten gebildet ist. Der Lagerspalt ist mit einem Ölfilm gefüllt, um einen direkten Kontakt der Welle mit der Lauffläche zu verhindern. Zum Aufbau des Ölfilms sind die Lagersegmente typischerweise durch Ölzuführbereiche voneinander getrennt. Über diese Ölzuführbereiche wird bei Betrieb Öl über zumindest einen Teil der Breite der Lagersegmente in den Lagerspalt eingeführt, durch die Rotation der Welle mitgerissen und seitlich ausgeschwemmt. Neben der oben genannten Schmierwirkung hat der Ölfilm die wesentliche Aufgabe der Lagerkühlung. Durch die auf den Ölfilm wirkenden Scherkräfte kommt es zu einer deutlichen Erwärmung, der durch den erläuterten, ständigen Ölaustausch (Zufuhr von Frischöl über die Ölzuführbereiche und seitliches Ausschwemmen des erhitzten Öls) entgegen gewirkt wird. Insbesondere bei schnell drehenden Wellen, dem typischen Einsatzgebiet von hydrodynamischen Gleitlagern, stellt eine hinreichende und zuverlässige Wärmeabfuhr eine zentrale Konstruktionsproblematik dar.

Allgemein sind hydrodynamische Gleitlager in Axiallagerbauweise, bei der die Lauffläche eben und senkrecht zur Axialrichtung der Welle ausgerichtet ist, sowie in Radiallagerbauweise, bei der die Lauffläche gekrümmt und koaxial zur gelagerten Welle ausgerichtet ist, bekannt. Bei Axiallagern sind die Lagersegmente im Wesentlichen als Kreisringsektoren ausgebildet, zwischen denen radial ausgerichtete Ölzuführbereiche angeordnet sind. Bei Radiallagern sind die Lagersegmente im Wesentlichen als Hohlzylindersektoren ausgebildet, zwischen denen axial ausgerichtete Ölzuführbereiche angeordnet sind. Auch Kombinationen beider Lagertypen sind dem Fachmann bekannt. Die vorliegende Erfindung ist nicht auf eine spezielle der vorgenannten Varianten beschränkt. Zudem kann man Gleitlager nach der Ausgestaltung ihrer Segmente in Kippsegment- und Festsegmentlager unterteilen.

Die AT 382215 B adressiert das oben angesprochene Kühlungsproblem, indem sie in der Lauffläche mehrere im Wesentlichen parallel zur Rotationsrichtung ausgerichtete, flache Nuten vorschlägt. Diese Nuten dienen als lokale Öldepots zur Erhöhung des Gesamtvolumens des Ölfilms, wodurch dessen Gesamt-Wärmekapazität erhöht und die Wärmeabfuhr verbessert werden soll. Auch die EP 3 477 131 A1 offenbart ein RadialGleitlager mit flachen Axialnuten in den Laufflächen seine Lagerschalen.

Aus der eingangs genannten, gattungsbildenden Druckschrift ist es bekannt, vorwiegend quer zur Rotationsrichtung ausgerichtete Nuten in die Lauffläche einzubringen. Zur Motivation dieser Maßnahme nennt die Druckschrift allerdings nicht das oben angesprochene Kühlungsproblem. Vielmehr sollen die Nuten als Schmutzfallen für in den Lagerspalt eingedrungene Schmutzpartikel dienen, um diese von einer Beschädigung der Wellenoberfläche bzw. der Lager-Lauffläche abzuhalten.

Aus der GB 664,426 A ist ein Gleitlager bekannt, dessen Lauffläche Einlagen aus einem reibungsmindernden Weichmetall wie Blei oder Zinn aufweist. Hierzu wird zylindrisches oder halbzylindrisches Stangenmaterial kraftschlüssig in nutartige Ausnehmungen im Rohling des Lagerkörpers eingepresst.

Aus der US 2015/0192172 A1 und der US 2006/0577059 A1 sind ähnliche Gleitlager bekannt, die jedoch formschlüssig in Nuten des Lagerkörper-Rohlings fixierte Graphitstücke als reibungsminderndes Material verwenden.

Aus der DE 37 06 571 A1 ist ein Axialgleitlager bekannt, dessen Lauffläche Nuten zur Ölzufuhr und zum Fangen und Abführen von Verschmutzungen aufweist. Bei einer der in der genannten Druckschrift offenbarten Ausführungsformen sind die Nuten, deren Nutwände im Wesentlichen senkrecht sind, in ihrem bodennahen Fußbereich mit herstellungsbedingten Hinterschneidungen versehen, die jedoch für die Nutfunktion irrelevant sind.

Ein grundsätzlich ähnlich aufgebautes Gleitlager ist in der DE 36 17 087 A1 offenbart, die beiläufig die grundsätzliche Möglichkeit einer hinterschnittenen Nutform erwähnt.

Die DE 34 28 846 A1, die EP 0 246 424 A2, die US 2015/ 015 9692 A1, die JP 09144750 A und die US 5 746 516 A offenbaren allesamt Gleitlager mit Nuten, die senkrechte Nutwände aufweisen.

Die DE 10 2013 211 710 B3 offenbart mehrere Ausführungsformen von Nuten in den Laufflächen der Lagerschalen eines Axialgleitlagers. Einige Ausführungsformen weisen senkrechte Nutwände auf. Andere Ausführungsformen haben Nuten mit einer senkrechten und einer schrägen Nutwand, wobei sich die Nutbreite vom Nutgrund zu den Nutkanten hin kontinuierlich weitet.

Aus der DE 10 2008 000 853 A1 ist ein hydrodynamisches Radialgleitlager mit einer einteiligen Schwimmbuchse oder Semi-Schwimmbuchse bzw. Festbuchse bekannt, dessen Innenwandung mit Axialnuten versehen ist, deren jeweils in Rotationsrichtung hintere Nutkanten schräg zu ihrer jeweils zugeordneten Radialebene ausgerichtet und gegenüber dieser hinterschnitten sind und deren jeweils in Rotationsrichtung vordere Nutkanten nicht-hinterschnitten schräg zu ihrer jeweils zugeordneten Radialebene ausgerichtet sind.

### Aufgabenstellung

Es ist die Aufgabe der vorliegenden Erfindung, ein gattungsgemäßes Gleitlager derart weiterzubilden, dass eine verbesserte Kühlung gewährleistet ist.

### Darlegung der Erfindung

Diese Aufgabe wird in Verbindung mit den Merkmalen des Oberbegriffs von Anspruch 1 dadurch gelöst, dass die jeweils in Rotationsrichtung hinteren Nutkanten schräg zu ihrer jeweils zugeordneten Radialebene ausgerichtet und gegenüber dieser hinterschnitten sind und die jeweils in Rotationsrichtung vorderen Nutkanten nicht-hinterschnitten schräg zu ihrer jeweils zugeordneten Radialebene ausgerichtet sind.

Bevorzugte Ausführungsformen der Erfindung sind Gegenstand der abhängigen Patentansprüche.

Der Erfindung liegt die Erkenntnis zugrunde, dass die Wärmeaufnahme des Ölfilms wesentlich verbessert werden kann, wenn dessen laminare Strömungsstruktur lokal gezielt gestört wird. Es hat sich gezeigt, dass sich bei Betrieb im Ölfilm zum Segmentende hin (in Rotationsrichtung gesehen) ein deutlicher Temperaturgradient vom kühleren, wellennahen Bereich zum deutlich wärmeren, lagernahen Bereich aufbaut. Aufgrund der laminaren Strömungsstruktur wächst dieser Temperaturgradient in Laufrichtung stetig an. Der lagernahe Bereich heizt sich dabei stark auf. Der wellennahe Bereich bleibt hingegen vergleichsweise kühl, d.h. sein Wärmeaufnahme-, mithin sein Kühlungspotential wird nicht optimal ausgenutzt. Die aus dem Stand der Technik bekannten, in Rotationsrichtung ausgerichteten Laufflächennuten ändern an diesen Zusammenhängen nichts. Ihre Kühlungsverbesserungswirkung beruht, wie eingangs erläutert, auf dem Prinzip der Volumen- und damit der Wärmekapazitätserhöhung. Auch die aus dem Stand der Technik bekannten, zu anderen Zwecken gedachten Quernuten lassen die geschilderten Strömungsverhältnisse und damit den fraglichen Temperaturgradienten ebenfalls weitgehend unbeeinflusst. Die vorliegende Erfindung sieht nun jedoch eine spezielle Form von Quernuten vor. Diese zeichnen sich durch eine besondere Neigung ihrer Hinterkante aus. Diese ist gegenüber der der betrachteten Nutkante zugeordneten Radialebene hinterschnitten. Als Radialebene wird jede Ebene bezeichnet, in der die Zentralachse des Lagers bzw. die Rotationsachse der Welle liegt. Die einer speziellen Nut bzw. Nutkante zugeordnete Radialebene ist diejenige Radialebene in der zusätzlich die betrachtete Position der Nut bzw. Nutkante liegt. Hinterschnitt bedeutet hier eine Winkellage der Nuthinterkante, die bei einer als senkrecht angenommenen Nutvorderkante zu einer Breite des Nutgrundes größer als die Breite der Nutöffnung führen würde. Allerdings ist die hier allein aus Illustrationsgründen genannte Prämisse einer senkrechten Nutvorderkante nicht Bestandteil der vorliegenden Erfindung, die sich lediglich auf die hinterschnittene Ausgestaltung der Nuthinterkante gegenüber der zugeordneten Radialebene bezieht. Im Gegenteil ist, wie weiter unten noch näher beschrieben, die Nutvorderkante ebenfalls schräg (allerdings nicht hinterschnitten) zu der ihr zugeordneten Radialebene ausgerichtet. Der Hinterschnitt der Nuthinterkante hat, wie die Erfinder erkannt haben, die effiziente Ausbildung einer lokalen Turbulenz im Ölfilm zur Folge, die die unterschiedlich warmen Ölanteile verwirbelt und dadurch zu einem Temperaturausgleich innerhalb des Ölfilms führt. Hierdurch kann in Rotationsrichtung hinter dem Wirbel das bislang ungenutzte Wärmeaufnahmepotenzial derjenigen, kühleren Ölanteile genutzt werden, die vor der Verwirbelung aufgrund der laminaren Strömung im wellennahen Bereich des Ölfilms gefangen waren. Die Erfindung führt also ohne Erhöhung des Ölvolumens allein aufgrund einer vollständigeren Ausnutzung des Wärmeaufnahmepotentials des Ölfilms durch eine lokale Schichtdurchmischung zu einer verbesserten Lagerkühlung.

Als besonders effizient hat es sich erwiesen, wenn die hinterschnittenen Nutkanten in einem Winkel von 5° bis 20° zu ihrer jeweils zugeordneten Radialebene stehen. Eine solche Winkelwahl führt zu den beabsichtigten Effekten; zugleich lässt sich eine entsprechende Nut ohne zu großen Aufwand auch praktisch mit den bevorzugten Dimensionen realisieren. Ganz allgemein gilt, dass die Nuttiefe h bevorzugt im Bereich zwischen 0,05 und 0,5 Millimeter liegt. Die (öffnungsseitige) Nutbreite d liegt in vergleichbarer Größenordnung.

Für den oben erläuterten Kühlungsmechanismus hat es sich als besonders vorteilhaft erwiesen, wenn die Nuten nicht über die gesamte Lauffläche verteilt, sondern im sogenannten Druckabfallgebiet des Gleitlagers bzw. jedes seiner Segmente konzentriert sind. Konstruktiv bedeutet das, dass die Nuten bevorzugt in einem Nutbelegungsgebiet angeordnet sind, welches in Rotationsrichtung bei 60-65% der Segmentlänge beginnt und bei 90-95% der Segmentlänge endet. Mit anderen Worten liegt das Nutbelegungsgebiet an dem dem für dieses Lagersegment zuständigen Ölzuführbereich abgewandten Ende des Segmentes. Die besondere Effizienz dieser Anordnung beruht insbesondere auch darauf, dass sich das über den Ölzuführbereich zugeführte, frische, kühle Öl während seines Transportes in Rotationsrichtung immer weiter aufheizt und beim Eintritt in das bevorzugte Nutbelegungsgebiet einen erheblichen Temperaturgradienten aufgebaut hat, der nun in der oben erläuterten Weise, kühlend abgebaut wird.

Alternativ oder - bevorzugt - zusätzlich kann vorgesehen sein, dass die Nuten in einem Nutbelegungsgebiet angeordnet sind, welches sich über die zentralen 60-90% der Segmentbreite erstreckt. Mit anderen Worten sind die Nuten im Zentralbereich der Lauffläche konzentriert und ragen seitlich nicht bis an den Segmentrand heran. Hierdurch wird ein übermäßiges Ausschwemmen von Öl durch die Nuten verhindert.

Innerhalb des Nutbelegungsgebiets nehmen die Nuten vorzugsweise 10-60%, insbesondere 20-30% von dessen Fläche ein. Die übrige Fläche wird von Stegen zwischen den Nuten eingenommen.

Bei einer bevorzugten Ausgestaltung der Nutform ist vorgesehen, dass die Nuten in ihrer Längserstreckungsrichtung unterbrochen sind. Sie bilden somit in Längserstreckungsrichtung benachbart zueinander angeordnete Teilnuten, die jeweils durch einen Quersteg voneinander getrennt sind. Dies ist im Hinblick auf die Tragkraft des Lagers vorteilhaft gegenüber Ausführungsformen mit nicht unterbrochenen, extrem langerstreckten Nuten.

Die Unterbrechungen, mithin die Querstege, sind bevorzugt quer zur Rotationsrichtung zueinander versetzt angeordnet. Dadurch wird trotz der Nutunterbrechung verhindert, dass sich innerhalb des Nutbelegungsgebietes ein in Rotationsrichtung orientierter Streifen ausbildet, in dem es nicht zur erfindungsgemäßen Verwirbelung kommt. Vielmehr erfolgt die erfindungsgemäße Verwirbelung und Kühlungsverbesserung über die gesamte Breite des Nutbelegungsgebietes.

Die vorliegende Erfindung lässt sich sowohl bei Axial- wie auch bei Radiallagern einsetzen. Die Einsatzmöglichkeiten gelten für Festsegmentlager ebenso wie für Kippsegmentlager, bei welchen die einzelnen Lagersegmente nicht fest, sondern kippbeweglich angeordnet sind. Wie bei herkömmlichen, aus mehreren Lagersegmenten zusammengesetzten Gleitlagern üblich, erstreckt sich auch bei erfindungsgemäßen Gleitlagern vorzugsweise zwischen je zwei benachbarten Lagersegmenten ein diese voneinander beabstandender Ölzuführbereich quer zur Rotationsrichtung.

In Bezug auf den Abstand zweier benachbarter Nutreihen hat sich eine bestimmte Abhängigkeit dieses Maßes vom Maß des Gleitlagers 10, 10' als solches als günstig erwiesen. Bei einem Radiallager 10 mit einem lichten Durchmesser von 100 mm hat sich ein Nutabstand von 0,5 mm bis 2,5 mm, vorzugsweise ca. 1 mm als vorteilhaft erwiesen. Mit einem Skalierungsfaktor von (D/100)^{0,5} mit B=Lagerdurchmesser in Millimeter lässt sich dieses Maß an andere Lagergrößen anpassen. Bei Axiallagern hat sich der Abstand zweier Nutreihen (gemessen in Nutmitte) von 0,4 mm bis 1,6 mm, vorzugsweise von 0,8 mm für Lager mit einer Segmentlänge in Umfangsrichtung von 30 mm ergeben. Mit einem Skalierungsfaktor von (L/30)^{0,5} mit L=Segmentlänge in Millimetern, lässt sich dieses Maß auf Axiallager anderer Baugröße übertragen.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Schnittdarstellung eines erfindungsgemäßen Gleitlagers in Radiallager-Bauform,
- Figur 2:: eine schematische Abwicklung eines der Lagersegmente des Gleitlagers von Figur 1,
- Figur 3:: eine schematische Schnittdarstellung einer Nut eines erfindungsgemäßen Gleitlagers sowie
- Figur 4:: eine schematische Draufsicht auf ein erfindungsgemäßes Gleitlager in Axiallager-Bauform.

### Beschreibung bevorzugter Ausführungsformen

Gleiche Bezugszeichen in den Figuren deuten auf gleiche oder analoge Elemente hin.

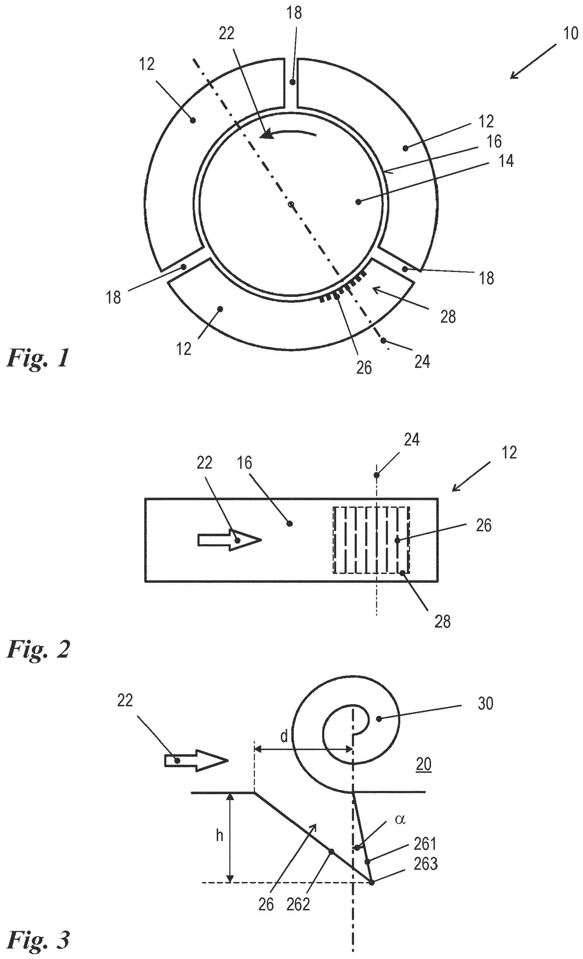

Figur 1 zeigt in stark schematisierter Darstellung eine Schnittansicht eines erfindungsgemäßen Gleitlagers 10 in Radiallager-Bauform. Das Gleitlager 10 ist bei der dargestellten Ausführungsform aus drei Lagersegmenten 12 zusammengesetzt, deren innere Segmentflächen gemeinsam eine koaxial zur gelagerten Welle 14 angeordnete Lauffläche 16 bilden. Zwischen den einzelnen Lagerschalen 12 ist jeweils ein Ölzuführbereich 18 angeordnet, durch den Öl zur Schmierung und Kühlung in den zwischen der Welle 14 und der Lauffläche 16 ausgebildeten Lagerspalt 20 gezogen werden kann. Der Bewegungspfeil 22 deutet die Rotationsrichtung der Welle 14 an. Strichpunktiert dargestellt eine Radialebene 24.

Im in Rotationsrichtung der Welle 14 hinteren Bereich seiner Segmentfläche weist das untere, tragende Lagersegmente 12 ein mit Nuten 26 belegtes Nutbelegungsgebiet 28 auf. Die oberen, vom Gewicht der Welle 14 weniger belasteten Lagersegmente 12 weisen im gezeigten Ausführungsbeispiel kein Nutbelegungsgebiet auf, obgleich dies bei anderen Ausführungsformen durchaus möglich wäre. Es hat sich jedoch herausgestellt, dass die erfindungsgemäßen Nuten 26 bei Radiallagern vor allem in den Segmentflächen der bzw. des tragenden Segmente(s) besonders und meist hinreichend wirksam sind. Typischerweise sind dies die unteren ein bis zwei Lagersegmente.

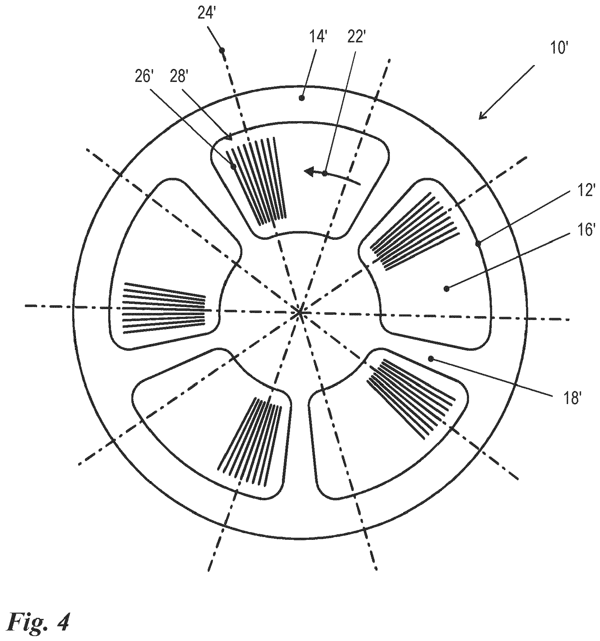

Figur 4 zeigt ein analog aufgebautes Gleitlager 10' in Axiallager-Bauweise. Die in Figur 4 verwendeten, gestrichenen Bezugszeichen entsprechen in ihrer Bedeutung den nicht gestrichenen Bezugszeichen von Figur 1, wobei der im bzw. parallel zur Zeichenebene liegende Lagerspalt in Figur 4 nicht erkennbar ist. Bei Axiallagern sind meist alle Lagersegmente 12' gleich stark belastet, sodass die erfindungsgemäßen Nuten 26' typischerweise in den Segmentflächen aller Segmente Einsatz finden. Strukturen, die für sämtliche Segmente vorhanden sind, sind der Übersichtlichkeit der Zeichnung halber nicht bei allen Segmenten sondern lediglich repräsentativ bei je einem dargestellten Segment mit Bezugszeichen versehen.

Bei den dargestellten Gleitlagern 10, 10' erstreckt sich das Nutbelegungsgebiet 28, 28' jeweils über einen Bereich, der nach ca. 65 % der Segmentlänge in Rotationsrichtung der Welle 14 beginnt und nach ca. 90% der Segmentlänge endet. Das Nutbelegungsgebiet ist also um ca. 65% der Segmentlänge vom vorangehenden Ölzuführbereich 18, 18' und um ca. 10 % der Segmentlänge vom nachfolgenden Ölzuführbereich 18, 18' entfernt angeordnet.

Wie für das Axiallager 10' aus Figur 4 und für das Radiallager 10 aus Figur 2 ersichtlich, erstreckt sich das Nutbelegungsgebiet nicht über die volle Segmentbreite. Vielmehr nimmt es lediglich die zentralen ca. 90% der Segmentbreite ein.

Die Nuten 26 sind, wie aus Figur 2 ersichtlich, beim dargestellten Axiallager 10 als in ihrer Längsrichtung unterbrochene Nuten ausgebildet. Die Nutunterbrechungen von jeweils zwei in Rotationsrichtung benachbart angeordneten Nuten sind quer zur Rotationsrichtung zueinander versetzt.

Figur 3 zeigt im Detail, wenngleich stark schematisiert, die grundsätzliche, erfindungsgemäße Form der Nuten 26. Diese zeichnet sich insbesondere dadurch aus, dass die in Rotationsrichtung hintere Nutkante 261 gegenüber der zugeordneten Radialebene 24 einen Hinterschnitt um einen Hinterschneidungswinkel α aufweist. Die vordere Nutkante 262 bildet eine vergleichsweise flache Schräge, die am (soweit fertigungstechnisch möglich) spitzwinklig ausgebildeten Nutgrund 263 unmittelbar auf die hintere Nutkante 261 stößt. Bei alternativen Ausführungsformen ist der Nutgrund nicht spitzwinklig sondern flach oder mit einem Radius ausgebildet, sodass vordere und hintere Nutkante 262, 261 dort nicht unmittelbar aufeinander treffen. Insbesondere in solchen Fällen ist auch ein deutlich steilerer Winkel der vorderen Nutkante 262 denkbar. Die Wirkung der erfindungsgemäßen Hinterschneidung ist in Figur 3 durch den Wirbel 30 angedeutet. Der im Lagerspalt 20 strömende Ölfilm bleibt quasi an der hinterschnittenen, hinteren Nutkante 261 hängen, sodass seine laminare Struktur zerstört und verwirbelt wird. Hierdurch kommt es zum Austausch wellennaher, kühlerer Ölanteile und lagernaher, wärmerer Ölanteile. Hierdurch ergibt sich ein thermischer Ausgleich innerhalb des Ölfilms und zwar in einem Lagerbereich, in dem das vom zuletzt passierten Ölzuführbereich 18 eingespeiste Frischöl bereits deutlich aufgeheizt ist. Zudem entspricht das gewählte Nutbelegungsgebiet 28 sehr genau dem Druckabfallgebiet des Lagers.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere kann die Anzahl der mit den erfindungsgemäßen Nuten versehenen Segmente variieren.

### Bezugszeichenliste

- 10: Gleitlager (Radiallager)
- 10': Gleitlager (Axiallager)
- 12, 12': Lagersegment
- 14, 14': Welle
- 16, 16': Lauffläche
- 18, 18': Ölzuführbereich
- 20: Rotationspfeil
- 24, 24': Radialebene
- 26, 26': Nut
- 261: hintere Nutkante
- 262: vordere Nutkante
- 263: Nutgrund
- 28, 28': Nutbelegungsgebiet
- 30: Wirbel
- h: Nuttiefe
- d: (öffnungsseitige) Nutbreite

## Patentansprüche

1. Hydrodynamisches Gleitlager (10, 10') zur Lagerung einer bei bestimmungsgemäßem Betrieb gelagert rotierenden Welle (14, 14'),
umfassend eine Mehrzahl von einander in Rotationsrichtung (22, 22') benachbart angeordneten Lagersegmenten (12, 12'), deren Segmentflächen gemeinsam eine Lauffläche (16, 16') für die Welle (14, 14') bilden,
wobei wenigstens ein Lagersegment (12, 12') in seiner Segmentfläche eine Mehrzahl von vorwiegend quer zur Rotationsrichtung (22, 22') ausgerichteten Nuten (26, 26') trägt,
**dadurch gekennzeichnet,**
**dass** die jeweils in Rotationsrichtung (22, 22') hinteren Nutkanten (261) schräg zu ihrer jeweils zugeordneten Radialebene (24, 24') ausgerichtet und gegenüber dieser hinterschnitten sind und
die jeweils in Rotationsrichtung (22, 22') vorderen Nutkanten (262) nicht-hinterschnitten schräg zu ihrer jeweils zugeordneten Radialebene (24, 24') ausgerichtet sind.

2. Hydrodynamisches Gleitlager (10, 10') nach Anspruch 1,
**dadurch gekennzeichnet,**
**dass** die hinterschnittenen Nutkanten (261) in einem Winkel von 5° bis 20° zu ihrer jeweils zugeordneten Radialebene (24, 24') stehen.

3. Hydrodynamisches Gleitlager (10, 10') nach einem der vorangehenden Ansprüche,
**dadurch gekennzeichnet,**
**dass** die Nuten (26, 26') in einem Nutbelegungsgebiet (28, 28') angeordnet sind, welches in Rotationsrichtung (22, 22') bei 60% bis 65% der Segmentlänge beginnt und bei 90% bis 95% der Segmentlänge endet.

4. Hydrodynamisches Gleitlager (10, 10') nach einem der vorangehenden Ansprüche,
**dadurch gekennzeichnet,**
**dass** die Nuten (26, 26') in einem Nutbelegungsgebiet (28, 28') angeordnet sind, welches sich über die zentralen 60% bis 90% der Segmentbreite erstreckt.

5. Hydrodynamisches Gleitlager (10, 10') nach einem der Ansprüche 3 bis 4,
**dadurch gekennzeichnet,**
**dass** die Nuten (26, 26') 10% bis 60%, insbesondere 20% bis 30% der Fläche des Nutbelegungsbereichs (28, 28') einnehmen.

6. Hydrodynamisches Gleitlager (10, 10') nach einem der vorangehenden Ansprüche,
**dadurch gekennzeichnet,**
**dass** wenigstens einige der Nuten (26, 26') in ihrer Längserstreckungsrichtung unterbrochen sind.

7. Hydrodynamisches Gleitlager (10, 10') nach Anspruch 6,
**dadurch gekennzeichnet,**
**dass** die Unterbrechungen von jeweils zwei in Rotationsrichtung (22, 22') benachbarten Nuten (26, 26') quer zur Rotationsrichtung (22, 22') zueinander versetzt angeordnet sind.

8. Hydrodynamisches Gleitlager (10, 10') nach einem der vorangehenden Ansprüche,
**dadurch gekennzeichnet,**
**dass** die Lauffläche (16') eben und senkrecht zur Axialrichtung der Welle (14') ausgerichtet ist und die Lagersegmente (12') als Kreisringsektoren ausgebildet sind.

9. Hydrodynamisches Gleitlager (10, 10') nach einem der Ansprüche 1 bis 7,
**dadurch gekennzeichnet,**
**dass** die Lauffläche (16) gekrümmt und koaxial zur Axialrichtung der Welle (14) ausgerichtet ist und die Lagersegmente (12) als Hohlzylindersektoren ausgebildet sind.

10. Hydrodynamisches Gleitlager (10, 10') nach einem der vorangehenden Ansprüche,
**dadurch gekennzeichnet,**
**dass** sich zwischen je zwei benachbarten Lagersegmenten (12, 12') ein diese voneinander beabstandender Ölzuführbereich (18, 18') quer zur Rotationsrichtung (22, 22') erstreckt.

## Claims

1. A hydrodynamic slide bearing (10, 10') for supporting a shaft (14, 14'), said shaft (14, 14') being rotatably mounted during its intended operation,
said slide bearing (10, 10') comprising a plurality of bearing segments (12, 12') arranged next to one another in the rotation direction (22, 22'), wherein the segment surfaces of said segment bearing segments (12, 12') together form a running surface (16, 16') for the shaft (14, 14'),
wherein at least one bearing segment (12, 12') has a plurality of grooves (26, 26') in its segment surface orientated substantially transverse to the rotation direction (22, 22'),
**characterized in that**
the rear groove edges (261) in the rotation direction (22, 22') are orientated obliquely to their respective assigned radial plane (24, 24') and are undercut in relation to same, and
the front groove edges (262) in the rotation direction (22, 22') are not undercut and are orientated obliquely to their respective assigned radial plane (24, 24').

2. The hydrodynamic slide bearing (10,10') according to claim 1,
**characterized in that**
the undercut groove edges (261) are arranged at an angle of 5° to 20° relative to their respectively assigned radial plane (24, 24').

3. The hydrodynamic slide bearing (10,10') according to one of the preceding claims,
**characterized in that**
the grooves (26, 26') are arranged in a groove arrangement region (28, 28') that, in the rotation direction (22, 22'), begins at 60% to 65% of the segment length and ends at 90% to 95% of the segment length.

4. The hydrodynamic slide bearing (10,10') according to one of the preceding claims,
**characterized in that**
the grooves (26, 26') are arranged in a groove arrangement region (28, 28') that extends over the central 60% to 90% of the segment width.

5. The hydrodynamic slide bearing (10,10') according to any one of claims 3 to 4,
**characterized in that**
the grooves (26, 26') occupy 10% to 60%, especially 20% to 30% of the area of the groove arrangement region (28, 28').

6. The hydrodynamic slide bearing (10,10') according to one of the preceding claims,
**characterized in that**
at least some of the grooves (26, 26') are interrupted in their longitudinal extension direction.

7. The hydrodynamic slide bearing (10,10') according to claim 6,
**characterized in that**
the interruptions of two respectively adjacent grooves (26, 26') in the rotation direction are arranged to each other with an offset transverse to the rotation direction (22, 22').

8. The hydrodynamic slide bearing (10,10') according to one of the preceding claims,
**characterized in that**
the running surface (16') is oriented planar and perpendicular relative to the axial direction of the shaft (14') and the bearing segments (12') are formed as circle ring sectors.

9. The hydrodynamic slide bearing (10,10') according to any one of claims 1 to 7,
**characterized in that**
the running surface (16) is curved and oriented coaxial to the axial direction of the shaft (14) and the bearing segments (12) are formed as hollow cylinder sectors.

10. The hydrodynamic slide bearing (10,10') according to one of the preceding claims,
**characterized in that**
an oil supply region (18, 18') extends transverse to the rotation direction (22, 22') between every two adjacent bearing segments (12, 12'), separating them.

## Revendications

1. Palier lisse hydrodynamique (10, 10') pour le montage d'un arbre (14, 14') tournant sur palier lors d'un fonctionnement conforme,
comprenant une pluralité de segments de palier (12, 12') disposés au voisinage les uns des autres dans le sens de rotation (22, 22'), dont les surfaces de segment forment ensemble une surface de roulement (16, 16') pour l'arbre (14, 14'),
au moins un segment de palier (12, 12') portant dans sa surface de segment une pluralité de rainures (26, 26') orientées principalement transversalement à la direction de rotation (22, 22'),
**caractérisé en ce**
**que** les arêtes de rainure (261) respectivement arrière dans le sens de rotation (22, 22') sont orientées obliquement par rapport à leur plan radial (24, 24') respectivement associé et sont contre-dépouillées par rapport à celui-ci et
les arêtes de rainure (262) respectivement avant dans le sens de rotation (22, 22') sont non contre-dépouillées et orientées obliquement par rapport à leur plan radial (24, 24') respectivement associé.

2. Palier lisse hydrodynamique (10, 10') selon la revendication 1,
**caractérisé en ce**
**que** les bords de rainure (261) en contre-dépouille forment un angle de 5° à 20° par rapport à leur plan radial (24, 24') respectif associé.

3. Palier lisse hydrodynamique (10, 10') selon l'une des revendications précédentes,
**caractérisé en ce**
**que** les rainures (26, 26') sont disposées dans une zone d'occupation des rainures (28, 28') qui, dans le sens de rotation (22, 22'), commence à 60% à 65% de la longueur du segment et se termine à 90% à 95% de la longueur du segment.

4. Palier lisse hydrodynamique (10, 10') selon l'une des revendications précédentes,
**caractérisé en ce**
**que** les rainures (26, 26') sont disposées dans une zone d'occupation des rainures (28, 28') qui s'étend sur les 60% à 90% centraux de la largeur du segment.

5. Palier lisse hydrodynamique (10, 10') selon l'une des revendications 3 à 4,
**caractérisé en ce**
**que** les rainures (26, 26') occupent 10% à 60%, notamment 20% à 30% de la surface de la zone d'occupation des rainures (28, 28').

6. Palier lisse hydrodynamique (10, 10') selon l'une quelconque des revendications précédentes,
**caractérisé en ce**
**qu'**au moins certaines des rainures (26, 26') sont interrompues dans leur direction d'extension longitudinale.

7. Palier lisse hydrodynamique (10, 10') selon la revendication 6,
**caractérisé en ce**
**que** les interruptions de respectivement deux rainures (26, 26') voisines dans le sens de rotation (22, 22') sont décalées l'une par rapport à l'autre transversalement au sens de rotation (22, 22').

8. Palier lisse hydrodynamique (10, 10') selon l'une des revendications précédentes,
**caractérisé en ce**
**que** la surface de roulement (16') est plane et orientée perpendiculairement à la direction axiale de l'arbre (14') et **en ce que** les segments de palier (12') sont des secteurs d'anneau circulaire.

9. Palier lisse hydrodynamique (10, 10') selon l'une des revendications 1 à 7,
**caractérisé en ce**
**que** la surface de roulement (16) est incurvée et orientée coaxialement à la direction axiale de l'arbre (14) et **en ce que** les segments de palier (12) sont des secteurs cylindriques creux.

10. Palier lisse hydrodynamique (10, 10') selon l'une des revendications précédentes,
**caractérisé en ce**
**qu'** une zone d'alimentation en huile (18, 18') s'étend transversalement au sens de rotation (22, 22') entre chaque paire de segments de palier adjacents (12, 12') et les maintient à distance l'un de l'autre.
